Europäisches Patentamt

European Patent Office

Office européen des brevets

(19)

(11) Publication number: **0 025 491**
**B1**

## (12) EUROPEAN PATENT SPECIFICATION

(45) Date of publication of patent specification: **08.01.86**

(51) Int. Cl.⁴: **G 01 J 3/433**

(21) Application number: **80104354.8**

(22) Date of filing: **24.07.80**

(54) A method and apparatus for detecting one or more spectral features in a sample.

(30) Priority: **14.09.79 US 75436**

(43) Date of publication of application:
**25.03.81 Bulletin 81/12**

(45) Publication of the grant of the patent:
**08.01.86 Bulletin 86/02**

(84) Designated Contracting States:
**DE FR GB IT**

(56) References cited:
JOURNAL OF APPLIED PHYSICS, vol. 45, no. 10, October 1974, NEW YORK (US) C. TANG et al.: "Laser modulation spectroscopy of solids", pages 4503-4505

OPTICS LETTERS, vol. 1, no. 4, October 1977, NEW YORK (US) E. MOSES et al.: "High sensitivity laser wavelength-modulation spectroscopy", pages 115-117

(73) Proprietor: **International Business Machines Corporation**
**Old Orchard Road**
**Armonk, N.Y. 10504 (US)**

(72) Inventor: **Bjorklund, Gary Carl**
**1201 Eureka Avenue**
**Los Altos California 94022 (US)**

(74) Representative: **Atchley, Martin John Waldegrave**
**IBM United Kingdom Patent Operations Hursley Park**
**Winchester, Hants, SO21 2JN (GB)**

(56) References cited:
APPLIED PHYSICS, vol. 7, no. 3, 1975, Ed. Springer Verlag, BERLIN (DE) K. TAKAGI et al.: "Spectroscopy with modulation sidebands", pages 181-185

"Handbook of Optiks" Driscoll, Vaughan, McGRAW-HILL BOOK COMPANY, 1978, p. 17.2 to 17.5

Courier Press, Leamington Spa, England.

## Description

This invention relates to a method and apparatus for detecting in a sample one or more spectral features each having a characteristic frequency.

Several different approaches have been reported in the literature for detecting a restricted type of spectral feature, that is, a single absorption line in a sample. One approach is described by M. Cardona in Modulation Spectroscopy, Academic Press, New York, 1979. This approach involves sinusiodally frequency-swept incoherent light untilized for some period of time to probe weak absorptions in solid state samples. In this approach, an RF signal is obtained which is proportional to the derivative of the absorption profile. This technique uses incoherent light and, hence, there is no heterodyne amplification of the signal. This method also required a monochromator to provide spectral resolutions and, as a result, spectral resolution finer than 30 GHz is not achieved.

Another approach is described by C. L. Tang in the Journal of Applied Physics, Vol. 45, page 4503, 1974. This approach involves a sinusoidally frequency-swept dye laser which is utilized to probe weak absorption in solid state samples. In this case, since a laser is used, spectral resolution of 10 MHz can be obtained. This technique uses a dye laser spectrum which is not a pure FM spectrum and, as a result, there is no heterodyne amplification of the signal. This technique cannot directly measure the absorption or dispersion since it only measures the derivative of the absorption.

A still further approach is described by K Takagi et al in an article entitled "Spectroscopy with Modulation Sidebands" in Applied Physics Vol. 7, No. 3, 1975 at pages 181—185. This article describes the amplitude modulation of a laser beam having a single basic frequency which remains constant. The amplitude modulated beam is then used to expose a sample containing a spectral feature and the modulated beam is analysed on emergence from the sample in order to indicate the presence or absence of the spectral feature.

The object of the present invention is to provide an improved method and apparatus for detecting in a sample at least one narrow spectral feature which has a characteristic frequency.

According to one aspect of the present invention a method for detecting in a sample a single narrow spectral feature having a characteristic frequency comprising

providing a beam of light having a central frequency $\omega_c$ which lies near the characteristic frequency of said feature and a bandwidth which does not include the characteristic frequency of said feature,

modulating said light beam so as to produce at least one side band having a frequency which coincides with the characteristic frequency of said feature,

exposing said sample to said modulated light beam, and

analysing said modulated light beam on emergence from said sample so as to detect said spectral feature,

is characterised in that said modulation operation comprises phase modulating said light beam with a single RF frequency so as to produce a spectrum of discrete frequencies a single pair of upper and lower sidebands, one of which sidebands has a frequency which coincides with the characteristic frequency of said spectral feature,

and in that said analysing operation comprises

photodetecting said modulated light beam on emergence from said sample to produce an output signal, detecting in said output signal a beat signal at the specific RF frequency used for phase modulation, and electronically monitoring the amplitude of said RF beat signal so as to indicate the strength of said narrow spectral feature.

According to another aspect of the present invention a method for detecting in a sample a plurality of narrow spectral features each having a respective characteristic frequency comprising

providing a beam of light having a central frequency $\omega_c$ which lies near the characteristic frequencies of said features and a bandwidth which does not include the characteristic frequencies of said features,

modulating said light beam so as to produce a plurality of side bands each of which has a frequency coinciding with the characteristic frequency of one of said features,

exposing said sample to said modulated light beam, and analysing said modulating light beam on emergence from said sample so as to detect said spectral features,

is characterised in that said modulation operation comprises phase modulating said light beam with a plurality of RF frequencies so as to produce a spectrum of discrete frequencies comprising a plurality of pairs of upper and lower sidebands, one of each pair of sidebands having a frequency which coincides with the characteristic frequency of a respective one of said spectral features,

and in that said analysing operation comprises

photodetecting said modulating light beam on emergence from said sample to produce an output signal, detecting in said output signal beat signals at the specific RF frequencies used for phase modulation, and electronically monitoring the amplitude of each of said RF beat signals so as to indicate the strength of each of said narrow spectral features.

According to a still further aspect of the present invention apparatus for detecting in a sample a single narrow spectral feature having a characteristic frequency comprising

means for providing a beam of light having a central frequency $\omega_c$ which lies near the characteristic frequency of said feature and a bandwidth which does not include the characteristic frequency of said feature,

means for modulating said light beam so as to produce at least one side band having a frequency which coincides with the characteristic frequency of said feature,

means for exposing said sample to said modulated light beam, and

means for analysing said modulated light beam on emergence from said sample so as to detect said spectral feature,

is characterised in that said means for modulating said light beam comprises means arranged to phase modulate said light beam with a single RF frequency so as to produce a spectrum of discrete frequencies comprising a single pair of upper and lower sidebands one of which sidebands has a frequency which coincides with the characteristic frequency of said spectral feature,

and in that said means for analysing said beam comprises means for photodetecting said modulated light beam on emergence from said sample so as to produce an output signal, and means arranged to detect in said output signal a beat signal at the specific RF frequency used for phase modulation, and to monitor electronically the amplitude of said RF beat signal so as to indicate the strength of said narrow spectral feature.

According to yet another aspect of the invention apparatus for detecting in a sample a plurality of narrow spectral features comprising

means for providing a beam of light having a central frequency $\omega_c$ which lies near the characteristic frequencies of said features and a bandwidth which does not include the characteristic frequencies of said features,

means for modulating said light beam so as to produce a plurality of side bands each of which has a frequency coinciding with the characteristic frequency of a respective one of said features,

means for exposing said sample to said modulated light beam, and

means for analysing said modulated light beam on emergence from said sample so as to detect said spectral features,

is characterised in that said means for modulating said light beam comprises

means arranged to phase modulate said light beam with a plurality of RF frequencies so as to produce a spectrum of discrete frequencies comprising a plurality of pairs of upper and lower sidebands, one of each pair of sidebands having a frequency which coincides with the characteristic frequency of a respective one of said spectral features,

and in that said means for analysing said modulated light beam comprises

means for photodetecting said modulated light beam on emergence from said sample so as to produce an output signal, and means arranged to detect in said output signal beat signals at the specific RF frequencies used for phase modulation, and to monitor electronically the amplitude of each of said RF beat signals so as to indicate the strength of each of said narrow spectral features.

The method and apparatus of the invention are distinguished from the prior art described above principally by the use of an RF frequency to phase modulate a single frequency beam of light in order to produce a pair of side band components. The modulated frequency is chosen so that one component of the pair has a frequency which coincides with the characteristic frequency of a spectral feature to be detected. By introducing side bands of this type into the light beam and exposing the sample to the beam as modulated in this manner the characteristics of one side band component of the pair will be altered on detecting a feature to be detected. Upon emergence of the beam from the sample the pair of side band components and the carrier will interact and generate a beat signal at the modulating RF frequency which will indicate whether or not the particular feature is present. By modulating the light beam at several RF frequencies pairs of side band components can be produced having frequencies which will coincide with the characteristic frequencies of two or more of the spectral features to be detected and analysis of the emergent modulated beam will indicate the presence or absence of all of the features to be detected. Multiple readout is therefore provided by the method and apparatus in accordance with the invention.

The invention will now be described by way of example with reference to the accompanying drawings in which:—

Figure 1 is a schematic diagram of an apparatus for detecting one or more spectral features according to the invention;

Figure 2 is a diagram showing the relative positions of hole locations and FM sidebands in one embodiment;

Figure 3 is a diagram showing the relative positions of hole locations and FM sidebands in a second embodiment; and

Figure 4 is a diagram showing the relative positions of the absorption line and FM sidebands.

A method and apparatus for detecting a narrow spectral feature in a sample is described. In this invention, a narrow spectral feature is defined as any optical property of the sample, such as absorption, transmission, reflectivity, index of refraction and optical length which varies rapidly with the optical frequency. Specific narrow spectral features which will be described in detail hereafter are (a) a narrow absorption line and (b) holes burned in a broad spectral feature such as an inhomogeneous absorption band. The method includes the steps of providing a beam of light having an optical frequency bandwith which is narrow compared to the width of the absorption line and having a centre frequency $\omega_c$ which lies near to the line, phase modulating the beam of light with a single RF frequency to provide a pure FM spectrum having upper and lower sidebands, exposing the sample containing the absorption line to the modulated light so that only one of the FM sidebands probes the absorption line, photodetecting the light emerging from the sample to detect a RF beat at the specific RF frequency used for phase modulation, and electronically monitoring the amplitude of the RF beat signal to indicate the strength of the absorption line. A preferred embodiment of this invention is a multiplex readout apparatus for hole burning memories. The apparatus includes means for using a frequency modulated laser light with widely spaced sidebands arranged so that only one of each pair of upper and lower sidebands probes the frequency location of each hole. The apparatus uses many simultaneous RF frequencies to drive the phase modulator and produce the light with FM sidebands which simultaneously probe all the hole locations of interest. The apparatus includes photodetection means to receive the light after it has passed through the sample and phase sensitive multiplex analyzing means to process the electrical signals from the photodetection means to indicate the presence or absence of holes.

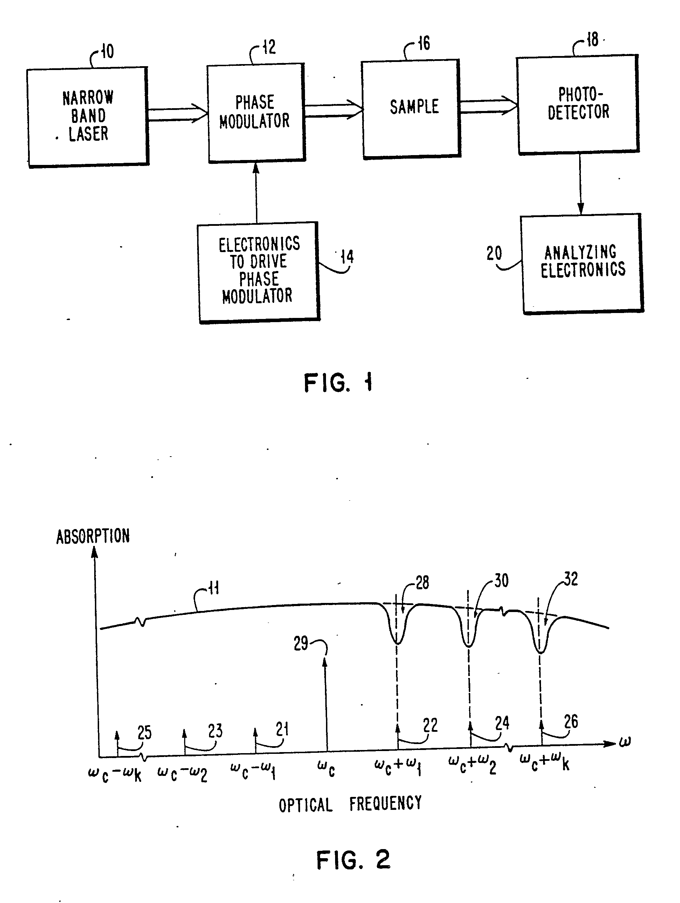

An embodiment will now be described in terms of the apparatus and method for the multiplex readout of information encoded by the presence or absence of photochemical holes burned in an inhomogeneous absorption band. As shown in Figure 1, the first step is to provide a narrow band laser 10 having an optical frequency $\omega_c$. Examples of a narrow band laser are a single frequency dye laser and a fixed single mode frequency solid state laser. The carrier frequency 29, $\omega_c$, is chosen to lie at the centre of the inhomogeneous absorption band 11 as shown in Figure 2. The inhomogeneous absorption band with holes is one example of a special feature whose absorption and index of refraction vary with optical frequency. The laser has a bandwidth which is narrow compared to the desired resolution of the information in the spectral feature, that is, the width of the photochemical holes. The laser passes light into the phase modulator 12 which modulates the light from the laser source to provide a plurality of widely spaced pairs of FM sidebands that are arranged so that only one of each pair probes the optical frequency of each hole. An example of a modulator 12 is an electro-optic phase modulator. Electronic means 14 drives the phase modulator 12 simultaneously with a plurality of different RF frequencies to produce light with FM sidebands which simultaneously probe all hole locations of interest in the sample 16 as shown in Figure 2. An example of electronic means 14 is a frequency comb generator. The modulated laser beam passes through the sample 16 containing the absorption band therein and impinges on a fast photodetector 18.

A bit of information in the sample 16 is encoded by the presence or absence of a hole at a location which corresponds to a particular FM upper sideband. For example, the FM upper sidebands 22, 24 and 26 correspond to the holes 28, 30 and 32 respectively. The presence of a hole will cause a differential absorption or phase shift to be experienced between the upper FM sidebands 22, 24 and 26, and the lower FM sidebands 21, 23 and 25 respectively which correspond to the hole location. Such a differential will produce a heterodyne amplified beat signal at the corresponding RF frequency at the photodetector 18, while if there is no differential, no beat signal will be produced.

The photodetector 18 electrical signal, which simultaneously contains the different RF frequencies which correspond to the holes which are present, is processed by phase sensitive multiplex analyzing electronics 20. An example of a photodetector 18 is a solid state PIN diode. The design of electronics 20 is straightforward and well within the state of the art. An example of the electronics 20 is a parallel array of double balanced mixers, each of which is driven by a local oscillator at one of the RF frequencies used to modulate the laser. The analyzing electronics 20 discriminates among the different hole locations on the basis of the different RF frequencies, and isolates the signals due to differential absorption from those due to differential phase shift by comparing the phase of each RF beat signal to the phase of the corresponding RF driving frequency of the modulator. If there are a large number of hole locations, it is advantageous to use only that portion of the beat signal which is due to the differential absorption, since the combined phase differentials caused by the presence of the holes at other frequency locations can cause a spurious differential signal. The length of time necessary for the multiplex readout is of the order of $\Delta\omega^{-1}$, where $\Delta\omega$ is the typical frequency spacing between hole locations.

By using this method and apparatus, all of the hole locations can be simultaneously probed and multiplex readout achieved without tuning the laser frequency or any of the RF frequencies. With this method, the entire multiplex readout of 100 holes can be accomplished in 10nsec, corresponding to a data rate of $10^{10}$ bits per second.

Another advantage with this method is the heterodyne amplification effect which produces the RF beat signals with amplitudes proportional to the geometric mean of the intensity of the carrier at $\omega_c$ and the FM sideband. This allows the hole locations to be probed with relatively weak optical power densities, thus eliminating undesirable further hole burning during readout.

This method also provides an additional advantage in that the beat signals appear at RF frequencies where the noise power of any well designed single axial mode laser will be very low and approach the quantum limit. This means that if N photons in a particular sideband are used to probe a particular location on the absorption profile, a differential absorption as small as one part in the square root of N can be detected. Thus, if a conservative number such as $10^{14}$ photons are assumed to be in the sideband, a differential absorption as small as one part in $10^7$ can be detected. This represents roughly a factor of $10^4$ advantage over conventional direct absorption spectroscopy done with slowly tuned lasers, which is limited by l/f noise to sensitivities which are $10^5$ worse than the quantum limit.

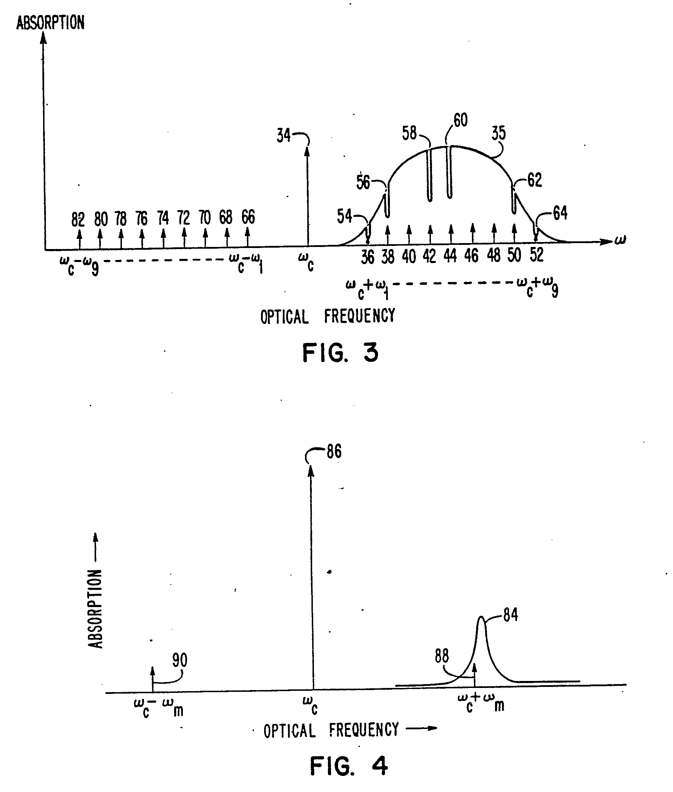

An alternative embodiment as shown in Figure 3 utilizes the same elements as described above. The only differences are that the carrier frequency 34, $\omega_c$, is chosen to lie near to, but not on, the inhomogeneous absorption band 35 and that the RF frequencies are chosen so that FM upper sidebands 36, 38, 40, 42, 44, 46, 48, 50 and 52 overlap the entire inhomogeneous absorption band 35. Figure 3 shows the relative positions of the holes 54, 56, 58, 60, 62 and 64 and the FM sidebands. A bit of information is encoded by the presence or absence of a hole at a location which corresponds to a particular FM upper sideband. If no hole is present the maximum differential absorption or phase shift will be experienced between the upper FM sidebands 36, 38, 40, 42, 44, 46, 48, 50 and 52 and the lower FM sidebands 66, 68, 70, 72, 74, 76, 80 and 82 which correspond to the hole location and thus the maximum beat signal at the corresponding RF frequency will be produced. The presence of a hole will produce a smaller differential and hence a smaller RF signal.

The applications of the invention are much broader than the embodiment dealing with multiplex readout for optical memories based upon photochemical hole burning. The invention also provides a basis for spectroscopic diagnostic instruments, for example, for gas phase chemical reaction or molecular beam epitaxy. For example, the invention may be applied to a method of detecting a specific narrow absorption line which is characteristic of a particular component in a sample. The first step in this method is providing a narrow beam of light having an optical frequency bandwidth which is narrower than the width of the absorption line 84 and which has a centre frequency 86 $\omega_C$, which lies near the line 84 as shown in Figure 4. The next step is to phase modulate the beam of light with a single RF frequency to provide a pure FM spectrum having upper 88 and lower 90 sidebands. An example of the electronic means used to drive the phase modulator is a sweep oscillator. In an alternative embodiment the sweep oscillator enables the RF frequency to be swept, that is, varied continuously, to provide a spectrum of the spectral feature. The sample is exposed to the modulated light so that only one of the FM sidebands, 88 in Fig. 4, probes the absorption line. The light emerging from the sample is then photodetected to detect an RF beat at the specific RF frequency used for phase modulation. The amplitude of the RF beat signal is electrically monitored as its frequency is varied to indicate the strength of the absorption line.

**Claims**

1. A method of detecting in a sample (16) a single narrow spectral feature having a characteristic frequency comprising

providing a beam of light (10) having a central frequency $\omega_c$ which lies near the characteristic frequency of said feature and a bandwith which does not include the characteristic frequency of said feature,

modulating said light beam so as to produce at least one side band having a frequency which coincides with the characteristic frequency of said feature,

exposing said sample to said modulated light beam, and

analysing said modulated light beam on emergence from said sample so as to detect said spectral feature,

characterised in that said modulation operation comprises phase modulating said light beam with a single RF frequency so as to produce a spectrum of discrete frequencies comprising a single pair of upper and lower sidebands, one of which sidebands has a frequency which coincides with the characteristic frequency of said spectral feature,

and in that said analysing operation comprises

photodetecting said modulated light beam on emergence from said sample to produce an output signal, detecting in said output signal a beat signal at the specific RF frequency used for phase modulation, and electronically monitoring the amplitude of said RF beat signal so as to indicate the strength of said narrow spectral feature.

2. A method as claimed in claim 1 characterised in that said modulation operation comprises sweeping said RF frequency so as to detect successively spectral features at different frequencies.

3. A method for detecting in a sample a plurality of narrow spectral features each having a respective characteristic frequency comprising

providing a beam of light (10) having a central frequency $\omega_c$ which lies near the characteristic frequencies of said features and a bandwidth which does not include the characteristic frequencies of said features,

modulating said light beam so as to produce a plurality of side bands each of which has a frequency coinciding with the characteristic frequency of one of said features,

exposing said sample to said modulated light beam, and

analysing said modulated light beam on emergence from said sample so as to detect said spectral features,

characterised in that said modulation operation comprises phase modulating said light beam with a plurality of RF frequencies so as to produce a spectrum of discrete frequencies comprising a plurality of pairs of upper and lower sidebands, one of each pair of sidebands having a frequency which coincides with the characteristic frequency of a respective one of said spectral features,

and in that said analysing operation comprises

photodetecting said modulating light beam on emergence from said sample to produce an output signal, detecting in said output signal beat signals at the specific RF frequencies used for phase modulation, and electronically monitoring the amplitude of each of said RF beat signals so as to indicate the strength of each of said narrow spectral features.

4. Apparatus for detecting in a sample (16) a single narrow spectral feature having a characteristic frequency comprising

means (10) for providing a beam of light having a central frequency $\omega_c$ which lies near the characteristic frequency of said feature and a bandwidth which does not include the characteristic frequency of said feature,

means (12, 14) for modulating said light beam so as to produce at least one side band having a frequency which coincides with the characteristic frequency of said feature,

means for exposing said sample to said modulated light beam, and

means (18, 20) for analysing said modulated light beam on emergence from said sample so as to detect said spectral feature,

characterised in that said means for modulating said light beam comprises means (12) arranged to phase modulate said light beam with a single RF frequency so as to produce a spectrum of discrete frequencies comprising a single pair of upper and lower sidebands, one of which sidebands has a frequency which coincides with the characteristic frequency of said spectral feature,

and in that said means for analysing said beam comprises

means (18) for photodetecting said modulated light beam on emergence from said sample so as to produce an output signal, and means (20) arranged to detect in said output signal a beat signal at the specific RF frequency used for phase modulation, and to monitor electronically the amplitude of said RF beat signal so as to indicate the strength of said narrow spectral feature.

5. Apparatus as claimed in claim 4 characterised in that said means for modulation sweeps said RF frequency so as to detect successively spectral features at different frequencies.

6. Apparatus for detecting in a sample (16) a plurality of narrow spectral features comprising

means (10) for providing a beam of light having a central frequency $\omega_c$ which lies near the characteristic frequencies of said features and a bandwidth which does not include the characteristic frequencies of said features,

means (12, 14) for modulating said light beam so as to produce a plurality of side bands each of which has a frequency coinciding with the characteristic frequency of a respective one of said features,

means for exposing said sample to said modulated light beam, and

means (18, 20) for analysing said modulated light beam on emergence from said sample so as to detect said spectral features,

characterised in that said means for modulating said light beam comprises

means (12, 14) arranged to phase modulate said light beam with a plurality of RF frequencies so as to produce a spectrum of discrete frequencies comprising a plurality of pairs of upper and lower sidebands, one of each pair of sidebands having a frequency which coincides with the characteristic frequency of a respective one of said spectral features,

and in that said means for analysing said modulated light beam comprises

means (18) for photodetecting said modulated light beam on emergence from said sample so as to produce an output signal, and means (30) arranged to detect in said output signal beat signals at the specific RF frequencies used for phase modulation, and to monitor electronically the amplitude of each of said RF beat signals so as to indicate the strength of each of said narrow spectral features.

7. Apparatus as claimed in claim 6 characterised in that said means for modulating said light beam comprises a RF comb generator (14).

**Patentansprüche**

1. Verfahren zur Feststellung eines einzelnen schmalen spektralen Merkmals mit einer charakteristischen Frequenz in einer Probe (16), welches

das Vorsehen eines Lichtbündels (10) mit einer in der Nähe der charakteristischen Frequenz des Merkmals liegenden Mittelfrequenz $\omega_c$ und einer die charakteristische Frequenz des Merkmals nicht enthaltenden Bandbreite,

das Modulieren des Lichtbündels zur Erzeugung wenigstens eines Seitenbands mit einer mit der charakteristischen Frequenz des Merkmals zusammenfallenden Frequenz,

das Belichten der Probe mit dem modulierten Lichtbündel, und

das Analysieren des modulierten Lichtbündels beim Austreten aus der Probe zur Feststellung des spektralen Mermals umfaßt,

dadurch gekennzeichnet, daß der Modulationsvorgang ein Phasenmodulieren des Lichtbündels mit einer einzigen Hochfrequenz zur Erzeugung eines Spektrums diskreter Frequenzen mit einem einzigen Paar aus einem oberen und einem unteren Seitenband, von denen eines eine mit der charakteristischen Frequenz des spektralen Merkmals zusammenfallende Frequenz hat, umfaßt,

und daß der Analysiervorgang

das Photodektieren des modulierten Lichtbündels beim Austreten aus der Probe zur Erzeugung eines Ausgangssignals, das Feststellen eines Schwebungssignals an der für die Phasenmodulation benutzten spezifischen Hochfrequenz im Ausgangssignal und

das elektronische überwachen der Amplitude des Hochfrequenz-Schwebungssignals zur Angabe der Stärke des schmalen spektralen Merkmals umfaßt.

2. Verfahren nach Anspruch 1, dadurch gekennzeichnet, daß der Moduliervorgang das Durchfahren der Hochfrequenz zur aufeinanderfolgenden Feststellung spektraler Merkmale an verschiedenen Frequenzen umfaßt.

3. Verfahren zur Feststellung mehrerer schmaler spektraler Merkmale, von denen jedes eine betreffende charakteristische Frequenz hat, in einer Probe, welches

das Vorsehen eines Lichtbündels (10) mit einer nahe bei den charakteristischen Frequenzen der

Merkmale liegenden Mittelfrequenz $\omega_c$ und einer die charakteristischen Frequenzen der Merkmale nicht enthaltenden Bandbreite,

das Modulieren des Lichtbündels zur Erzeugung mehrerer Seitenbänder, von denen jedes eine mit der charakteristischen Frequenz eines der Merkmale zusammenfallende Frequenz hat,

das Belichten der Probe mit dem modulierten Lichtbündel, und

das Analysieren des modulierten Lichtbündels beim Austreten aus der Probe zur Feststellung der spektralen Merkmale umfaßt,

dadurch gekennzeichnet, daß der Moduliervorgang ein Phasenmodulieren des Lichtbündels mit mehreren Hochfrequenzen zur Erzeugung eines Spektrums diskreter Frequenzen mit mehreren Paaren aus einem oberen und einem unteren Seitenband umfaßt, wobei eines eines jeden Paares von Seitenbändern eine mit der charakteristischen Frequenz eines betreffenden der spektralen Merkmale zusammenfallende Frequenz hat,

und daß der Analysiervorgang

das Photodetektieren des modulierten Lichtbündels beim Austreten aus der Probe zur Erzeugung eines Ausgangssignals, das Feststellen von Schwebungssignalen an den zur Phasenmodulation benutzten spezifischen Hochfrequenzen im Ausgangssignal, und

das elektronische Überwachen der Amplitude eines jeden der Hochfrequenz-Schwebungssignale zur Angabe der Stärke eines jeden der schmalen spektralen Merkmale umfaßt.

4. Vorrichtung zur Feststellung eines einzigen schmalen spektralen Merkmals mit einer charakteristischen Frequenz in einer Probe (16), welche

Mittel (10) zur Lieferung eines Lichtbündels mit einer nahe bei der charakteristischen Frequenz des Merkmals liegenden Mittelfrequenz $\omega_c$ und einer die charakteristische Frequenz des Merkmals nicht enthaltenden Bandbreite,

Mittel (12, 14) zur Modulierung des Lichtbündels zur Erzeugung wenigstens eines Seitenbands mit einer mit der charakteristischen Frequenz des Mermales zusammenfallenden Frequenz,

Mittel zur Belichtung der Probe mit dem modulierten Lichtbündel, und

Mittel (18, 20) zur Analyse des modulierten Lichtbündels beim Austreten aus der Probe zur Feststellung des spektralen Merkmals umfaßt,

dadurch gekennzeichnet, daß die Mittel zur Modulierung des Lichtbündels Mittel (12) umfassen, die für eine Phasenmodulation des Lichtbündels mit einer einzigen Hochfrequenz zur Erzeugung eines Spektrumsdiskreter Frequenzen mit einem einzigen Paar aus einem oberen und einem unteren Seitenband, von denen eines mit der charakteristischen Frequenz des spektralen Merkmals zusammenfallende Frequenz hat, eingerichtet sind,

und daß die Mittel zur Analyse des Bündels

Mittel (18) zur Photodetektierung des modulierten Lichtbündels beim Austreten aus der Probe zur Erzeugung eines Ausgangssignals und Mittel (20) umfassen, die für eine Feststellung eines Schwebungssignals an der zur Phasenmodulation benutzten spezifischen Hochfrequenz im Ausgangssignal und zur elektronischen Überwachung der Amplitude des Hochfrequenz-Schwebungssignals zur Angabe der Stärke des schmalen spektralen Merkmals eingerichtet sind.

5. Vorrichtung nach Anspruch 4, dadurch gekennzeichnet, daß die Mittel zur Modulierung zur aufeinanderfolgenden Feststellung von spektralen Merkmalen an verschiedenen Frequenzen die Hochfrequenz durchfahren.

6. Vorrichtung zur Feststellung mehrerer schmaler spektraler Merkmale in einer Probe (16), welche

Mittel (10) zur Lieferung eines Lichtbündels mit einer nahe bei den charakteristischen Frequenzen der Merkmale liegenden Mittelfrequenz $\omega_c$ und einer die charakteristischen Frequenzen der Merkmale nicht enthaltenden Bandbreite,

Mittel (12, 14) zur Modulierung des Lichtbündels zur Erzeugung mehrere Seitenbänder, von denen jedes eine mit der charakteristischen Frequenz eines betreffenden der Merkmale zusammenfallende Frequenz hat,

Mittel zur Belichtung der Probe mit dem modulierten Lichtbündel, und

Mittel (18, 20) zur Analyse des modulierten Lichtbündels beim Austreten aus der Probe zur Feststellung der spektralen Merkmale umfaßt,

dadurch gekennzeichnet, daß die Mittel zur Modulierung des Lichtbündels

Mittel (12, 14) umfassen, die für eine Phasenmodulation des Lichtbündels mit mehreren Hochfrequenzen zur Erzeugung eines Spektrums diskreter Frequenzen mit mehreren Paaren aus einem oberen und einem unteren Seitenband eingerichtet sind, wobei eines eines jeden Paares von Seitenbändern eine mit der charakteristischen Frequenz des betreffenden der spektralen Merkmale zusammenfallende Frequenz hat,

und daß die Mittel zur Analyse des modulierten Lichtbündels

Mittel (18) zur Photodetektierung des modulierten Lichtbündels beim Austreten aus der Probe zur Erzeugung eines Ausgangssignals und Mittel (20) umfassen, die für eine Feststellung von Schwebungssignalen bei den zur Phasenmodulation benutzten spezifischen Hochfrequenzen im Ausgangssignal und zur elektronischen Überwachung der Amplitude eines jeden der Hochfrequenz-Schwebungssignale zur Angabe der Stärke eines jeden der schmalen spektralen Mermale eingerichtet sind.

7. Vorrichtung nach Anspruch 6, dadurch gekennzeichnet, daß die Mittel zur Modulierung des Lichtbündels einen Hochfrequenzkammgenerator (14) umfassen.

## Revendications

1. Procédé pour détecter dans un échantillon (16) une caractéristique spectrale étroite unique possédant une fréquence caractéristique, et consistant à

produire un faisceau de lumière (10) possédant une fréquence centrale $\omega_c$ qui est proche de la fréquence caractéristique de ladite caractéristique et une largeur de bande qui n'inclut pas la fréquence caractéristique de ladite caractéristique,

moduler ledit faisceau de lumière de manière à produire au moins une bande latérale possédant une fréquence qui coïncide avec la fréquence caractéristique de ladite caractéristique,

soumettre ledit échantillon audit faisceau de lumière modulé, et

analyser ledit faisceau de lumière modulé lors de sa sortie dudit échantillon de manière à détecter ladite caractéristique spectrale,

caractérisé en ce que ladite opération de modulation inclut une modulation de phase dudit faisceau de lumière avec une seule fréquence radioélectrique de manière à produire un spectre de fréquences discrètes incluant un seul couple de bandes latérales supérieure et inférieure, dont l'une possède une fréquence qui coïncide avec la fréquence caractéristique de ladite caractéristique spectrale, et que ladite opération d'analyse consiste à réaliser la photodétection dudit faisceau de lumière modulé lors de sa sortie dudit échantillon de manière à produire un signal de sortie, à détecter dans ledit signal de sortie un signal de battement à la fréquence radioélectrique spécifique utilisée pour la modulation de phase et à contrôler par voie électronique l'amplitude dudit signal de battement à fréquence radioélectrique de manière à indiquer l'intensité de ladite caractéristique spectrale étroite.

2. Procédé selon la revendication 1, caractérisé en ce que ladite opération de modulation inclut l'operation de balayage de ladite fréquence radioélectrique de manière à détecter successivement des caractéristiques spectrales à des fréquences différentes.

3. Procédé pour détecter dans un échantillon une pluralité de caractéristiques spectrales étroites comportant chacune une fréquence caractéristique respective, consistant

à produire un faisceau de lumière (10) possédant une fréquence centrale $\omega_c$ qui est proche des fréquences caractéristiques desdites caractéristiques et une largeur de bande qui n'inclut pas les fréquences caractéristiques desdites caractéristiques,

à moduler ledit faisceau de lumière de manière à produire une pluralité de bandes latérales dont chacune possède une fréquence coïncidant avec la fréquence caractéristique de l'une desdites caractéristiques,

à exposer ledit échantillon audit faisceau de lumière modulé, et

à analyser ledit faisceau de lumière modulé lors de sa sortie dudit échantillon de manière détecter lesdites caractéristiques spectrales,

caractérisé en ce que ladite opération de modulation comprend une modulation de phase dudit faisceau de lumière avec une pluralité de fréquences radioélectriques pour produire un spectre de fréquences discrètes incluant une pluralité de couples de bandes latérales supérieures et inférieures, une bande latérale de chaque couple possédant une fréquence qui coïncide avec la fréquence caractéristique respectivement de l'une des caractéristiques spectrales et en ce que ladite opération d'analyse consiste à réaliser la photodétection dudit faisceau de lumière modulé lors de sa sortie hors dudit échantillon de manière à produire un signal de sortie, à détecter dans ledit signal de sortie des signaux de battement aux fréquences radioélectriques spécifiques utilisés pour la modulation de phase, et à contrôler par voie électronique l'amplitude de chacun desdits signaux de battement à fréquence radioélectrique de manière à indiquer l'intensité de chacune desdites caractéristiques spectrales étroites.

4. Appareil pour détecter dans un échantillon (16) une caractéristique spectrale étroite unique possédant une fréquence caractéristique, et comportant

des moyens (10) servant à fournir un faisceau de lumière possédant une fréquence centrale $\omega_c$ qui est proche de la fréquence caractéristique de ladite caractéristique et une largeur de bande qui n'inclut pas la fréquence caractéristique de ladite caractéristique,

des moyens (12, 14) pour moduler ledit faisceau de lumière à produire au moins une bande latérale possédant une fréquence qui coïncide avec la fréquence caractéristique de ladite caractéristique,

des moyens pour exposer ledit échantillon audit faisceau de lumière modulé, et

des moyens (18, 20) pour analyser le faisceau de lumière modulé lors de sa sortie dudit échantillon afin de détecter ladite caractéristique spectrale,

caractérisé en ce que lesdits moyens servant à moduler ledit faisceau de lumière comprennent des moyens (12) agencés pour réaliser une modulation de phase dudit faisceau de lumière avec une seule fréquence radioélectrique afin de produire un spectre de fréquences discrètes comprenant un seul couple de bandes latérales supérieure et inférieure, dont l'une possède fréquence qui coïncide avec la fréquence caractéristique de ladite caractéristique spectrale, et que lesdits moyens servant à analyser ledit faisceau comprennent des moyens (18) pour réaliser la photodétection dudit faisceau de lumière modulé lors de sa sortie dudit échantillon afin de produire un signal de sortie, et des moyens (20) agencés de manière à détecter dans ledit signal de sortie un signal de battement à la fréquence radioélectrique utilisée pour la modulation de phase et pour contrôler par voie électronique l'amplitude desdits signaux de battement à fréquence radioélectrique de manière à indiquer l'intensité de ladite caractéristique spectrale étroite.

5. Appareil selon la revendication 4, caractérisé en ce que lesdits moyens servant à réaliser la modulation réalisent un balayage de la fréquence radioélectrique de manière à détecter successivement des caractéristiques spectrales à des fréquences différentes.

6. Appareil pour détecter dans un échantillon (16) une pluralité de caractéristiques spectrales étroites, et comprenant

des moyens (10) pour produire un faisceau de lumière possédant une fréquence centrale $\omega_c$ qui est proche des fréquences caractéristiques desdites caractéristiques d'une largeur de bande qui n'inclut pas les fréquences caractéristiques desdites caractéristiques,

des moyens (12, 14) servant à moduler ledit faisceau de lumière de manière à produire une pluralité de bandes latérales dont chacune possède une fréquence coïncidant avec la fréquence caractéristique respectivement de l'une desdites caractéristiques,

des moyens pour exposer ledit échantillon audit faisceau de lumière modulé, et

des moyens (18; 20) pour analyser ledit faisceau de lumière modulé lors de sa sortie dudit échantillon afin de détecter lesdites caractéristiques spectrales,

caractérisé en ce que lesdits moyens servant à moduler ledit faisceau de lumière comprennent

des moyens (12, 14) agencés de manière à réaliser la modulation de phase dudit faisceau de lumière avec une pluralité de fréquences radioélectriques afin de produire des fréquences discrètes incluant une pluralité de couples de bandes latérales supérieure et inférieure, l'un de chaque couples des bandes latérales possédant une fréquence coïncidant avec la fréquence caractéristique respectivement de l'une desdites caractéristiques spectrales,

et que lesdits moyens servant à analyser ledit faisceau de lumière modulé comprennent

des moyens (18) pour réaliser la photodétection dudit faisceau de lumière modulé lors da sa sortie dudit échantillon afin de produire un signal de sortie, et des moyens (30) agencés de manière à détecter dans ledit signal de sortie, des signaux de battement situés aux fréquences radioélectriques spécifiques utilisées pour la modulation de phase, et à contrôler par voie électronique l'amplitude de chacun desdits signaux de battement à fréquence radioélectrique de manière à indiquer l'intensité de chacune desdites caractéristiques spectrales étroites.

7. Appareil selon la revendication 6, caractérisé en ce que lesdits moyens servant à moduler ledit faisceau de lumière comprennent un générateur (14) en peigne de fréquences radioélectriques.

FIG. 1

OPTICAL FREQUENCY

FIG. 2

FIG. 3

FIG. 4

2